# EUROPEAN PATENT SPECIFICATION

(11) **EP 3 744 602 B1**
(45) Date of publication and mention of the grant of the patent: **29.05.2024**
(21) Application number: 19177306.8
(22) Date of filing: 29.05.2019
(51) Int. Cl.: B60W 50/038, B60W 50/08, B60W 50/10, B60W 50/14

(54) **METHOD FOR CONTROLLING AN AUTONOMOUS DRIVING CONFIGURATION OR DRIVING ASSISTANCE CONFIGURATION**
VERFAHREN ZUR STEUERUNG EINER AUTONOMEN FAHRKONFIGURATION ODER FAHRHILFEKONFIGURATION
PROCÉDÉ DE COMMANDE D'UNE CONFIGURATION DE CONDUITE AUTONOME OU D'UNE CONFIGURATION D'ASSISTANCE À LA CONDUITE

(43) Date of publication of application: 02.12.2020
(73) Proprietor: Zenuity AB, 413 46 Göteborg (SE)
(72) Inventor: KARLSSON, Tobias, 414 68 Göteborg (SE); BUCHT, Mattias, 437 35 Lindome (SE)
(74) Representative: Zacco Sweden AB

(56) References cited:
- EP-A1- 3 453 570
- WO-A1-2016/109540
- WO-A1-2019/021430
- DE-A1-102017 214 654
- US-A1- 2019 031 187
- US-A1- 2019 126 892

## Description

### TECHNICAL FIELD

The present invention relates to autonomous driving (AD) and advanced driver-assistance systems (ADAS). More specifically, the present invention relates to a means for controlling an autonomous driving configuration or an advanced driver-assistance configuration and a user interface associated thereto.

### BACKGROUND

Today, many vehicles have a variety of driver support functions in the form of advanced driver assistance systems (ADAS). Also, many of these support function form a basis for current and future autonomous drive (AD) functions. Examples of ADAS features or functions include lane departure warning systems, lane centring, lane keeping aid, pilot assist, lane change assistance, parking sensors, pedestrian protection systems, blind spot monitors, adaptive cruise control (ACC), anti-lock braking systems, and so forth. These functions supplement the traditional driver control of the vehicle with one or more warnings or automated actions in response to certain scena rios.

In more detail, today's vehicles are developed through collaboration with electrical, electronic and mechanical technologies, as well as communication and information technologies in order to improve safety, convenience and reliability of the vehicle. A purpose of the fused technologies is to reduce traffic accidents and resultant losses by protecting vehicle occupants from dangerous situations such as vehicle defects, accidents, collisions, and so forth. Accordingly, the complexity of vehicle electronics and software has significantly increased during the last years. To a large extent, this is a result of the development of a large number of new functionalities, which in turn require a significant amount of information to be optically displayed to the driver. This information is typically conveyed via a plurality of User Interfaces (Uls) or Human Machine Interfaces (HMIs), such as the instrument cluster (behind the steering wheel), the centre console (i.e. the control-bearing surfaces in the centre area of the vehicle interior front beginning in the dashboard and continuing beneath it) and, increasingly often in modern cars, a head-up-display (HUD).

An example of an in-vehicle user interface is disclosed in DE 10 2017 214654 A1, which discloses a display-control unit with a control unit, at least one control element and a display device for specifying a driving mode of a motor vehicle. Moreover, US 2019/0031187 A1 discloses systems and methods for determining a drive mode for a vehicle, and more specifically, to determining the drive mode based on occupants' preferences, and providing a user-adjustable graphic user interface (GUI) to the occupants and determining the drive mode based on the user input on the GUI.

Further, the driver or user of the vehicle can be provided with information of various current ADAS or AD feature settings via one or more user interfaces in the vehicle. However, as mentioned, as the complexity of in-vehicle feature and system increase, the sheer number of user-adjustable parameters and their relationships can easily become overwhelming. Thus, the user interface is not only important from a safety perspective due to driver/user distraction, but also important from a user-experience (UX) perspective. More particularly, in reference to the latter, different persons have different preferences for driving style; while some might appreciate AD features with an "aggressive" style, others may appreciate a "defensive" driving style. Aggressive and defensive driving styles may be defined by differing values of various parameters such as brake timing, entry speed into curves, distance to preceding vehicle, acceleration timing out of curve, and so forth. Thus, there is a need for solutions that are more intuitive for the user/driver and allows for a simple and efficient configuration of AD/ADAS features.

Accordingly, the development of AD/ADAS features and all systems associated thereto are important factors not only in terms of increasing road safety, but also in terms of reducing the cognitive burden for vehicle users and improving the overall user experience.

### SUMMARY OF THE INVENTION

It is therefore an object of the present invention to provide a method for controlling an autonomous driving configuration or advanced driver-assistance configuration comprising at least two adjustable parameters, a computer-readable storage medium, a control device, and a vehicle which alleviates all or at least some of the drawbacks of presently known solutions.

It is another object of the present invention to provide a method for controlling an autonomous driving configuration or advanced driver assistance configuration comprising at least two adjustable parameters, a computer-readable storage medium, a control device, and a vehicle, which is more user-friendly and intuitive and therefore less distracting for a user/driver of the vehicle while the vehicle is operating.

This/These object(s) is/are achieved by means of a method for controlling an autonomous driving configuration or advanced driver assistance configuration comprising at least two adjustable parameters, a computer-readable storage medium, a control device, and a vehicle as defined in the appended claims. The term exemplary is in the present context to be understood as serving as an instance, example or illustration.

According to a first aspect of the present invention, there is provided a method for controlling an autonomous driving configuration or advanced driver-assistance configuration comprising at least two adjustable parameters. The method comprises, at an electronic device with a display, displaying on the display a user interface. The user interface comprises a graphical representation of a current setting of the at least two adjustable parameters associated with the autonomous driving configuration or advanced driver-assistance configuration. The method further comprises detecting via one or more input devices, a user input directed towards a first adjustable parameter of the at least two adjustable parameters, and updating the graphical representation on the display based on the detected user input. More specifically, the updating of the graphical representation is done by modifying the current setting of the first adjustable parameter of the at least two adjustable parameters and modifying at least one characteristic of a second adjustable parameter of the at least two adjustable parameters based on the detected user input. The first adjustable parameter is brake timing and the second adjustable parameter is acceleration timing or distance to lead vehicle.

The presented method enables for providing a user-friendly and intuitive user-interface for controlling AD or ADAS features of a vehicle. Moreover, the presented method provides an overview of the co-dependence of the various user-adjustable parameters associated with one or more AD or ADAS features, thereby providing the driver with real-time feedback of how one parameter adjustment affects the other parameters of a currently used AD or ADAS feature. The at least two adjustable parameters may further comprise parameters selected from the group comprising, a curve speed, a stiffness of a steering, a gap size for lane change, an execution time for lane change, an intersection approach speed, and a lead vehicle speed change rate. Further examples of adjustable parameters include relative speed between ego-vehicle and lead vehicle, lateral distance between ego-vehicle and lead vehicle measured at right angles to the lead vehicle heading, yaw rate, and timing for evasive action (late or early),

Further, according to an exemplary embodiment of the present invention the step of modifying at least one characteristic of the second adjustable parameter comprises modifying at least one boundary value of the second adjustable parameter based on a first predefined function. In other words, an operable range (minimum and maximum values) of a second adjustable parameter can be altered based on a selected current setting of the first parameter. For example, if the first parameter is brake timing, and if the driver/user selects a "later" brake timing the minimum allowable distance to a preceding/lead vehicle may be increased.

Yet further, according to another exemplary embodiment of the present disclosure, the step of modifying at least one characteristic of the second adjustable parameter comprises modifying a current setting of the second adjustable parameter based on a second predefined function. In other words, a current setting of a second adjustable parameter can be altered based on a selected current setting of the first parameter. Continuing the above example, if the first parameter is brake timing, and if the driver/user selects a "later" brake timing the current value of the desired distance to a preceding/lead vehicle can be increased. In more detail, the second predefined function be based on one or more safety models defining the dependence between various parameters, and accordingly determine that if the user selects a specific brake timing value the distance to a preceding/lead vehicle should be a predefined value. The predefined value may as mentioned be determined by the second function which can be based on one or more safety models and/or one or more comfort models. The comfort model(s) may for example be designed to provide a smooth ride for the vehicle occupants, without unnecessary hard braking, rapid accelerations, or other "uncomfortable" manoeuvres. The first function and the second function may be different independent functions, or the same function designed to output both a current value and operable range of a second parameter based on a change of a first parameter.

According to a second aspect of the present invention, there is provided a (non-transitory) computer-readable storage medium storing one or more programs configured to be executed by one or more processors of a control device connected to a display and to an input device, the one or more programs comprising instructions for performing the method according to any one of the embodiments disclosed herein. With this aspect of the invention, similar advantages and preferred features are present as in the previously discussed first aspect of the invention.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

Further, according to a third aspect of the present invention there is provided a control device for controlling an autonomous driving configuration or advanced driver-assistance configuration comprising at least two adjustable parameters. The control device comprises a control circuit connected to a display and one or more input devices. The control circuit is configured to display, on the display, a user interface. The user interface comprises a graphical representation of a current setting of the at least two adjustable parameters associated with the autonomous driving configuration or advanced driver-assistance configuration. The control circuit is further configured to detect via the one or more input devices, a user input directed towards a first adjustable parameter of the at least two adjustable parameters, and to update the graphical representation on the display based on the detected user input. More specifically, the control circuit is configured to modify the current setting of the first parameter of the at least two adjustable parameters and to modify at least one characteristic of a second adjustable parameter of the at least two adjustable parameters based on the detected user input. The first adjustable parameter is brake timing and the second adjustable parameter is acceleration timing or distance to lead vehicle. With this aspect of the invention, similar advantages and preferred features are present as in the previously discussed first aspect of the invention.

The term "connected to" is to be interpreted broadly in the present context and comprises both wired and wireless connections. In more detail, connected to can be understood as "in operative connection", meaning that the entities (e.g. control circuit and display) need not necessarily be connected directly to one another but can be peripheral units of in bus communication architecture and the connection can be realised using both parallel and bit serial connections. An example of an applicable communication protocol is Controller Area Network (CAN) protocol.

Further, in accordance with a fourth aspect of the present invention, there is provided a vehicle comprising an electronic device comprising a display and at least one input device. The vehicle further comprises a control device for controlling an autonomous driving configuration or advanced driver assistance configuration comprising at least two adjustable parameter according to any one of the embodiments disclosed herein. With this aspect of the invention, similar advantages and preferred features are present as in the previously discussed first aspect of the invention.

Further embodiments of the invention are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present invention will in the following be further clarified with reference to the embodiments described hereinafter.

### BRIEF DESCRIPTION OF THE DRAWINGS

Further objects, features and advantages of embodiments of the invention will appear from the following detailed description, reference being made to the accompanying drawings, in which:
Fig. 1 is a schematic flow chart representation of a method for controlling an autonomous driving configuration or advanced driver assistance configuration in accordance with an embodiment of the present invention.
Fig. 2 is a schematic side view illustration of a vehicle comprising a control device for controlling an autonomous driving configuration or advanced driver assistance configuration comprising in accordance with an embodiment of the present invention.

### DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present invention is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components.

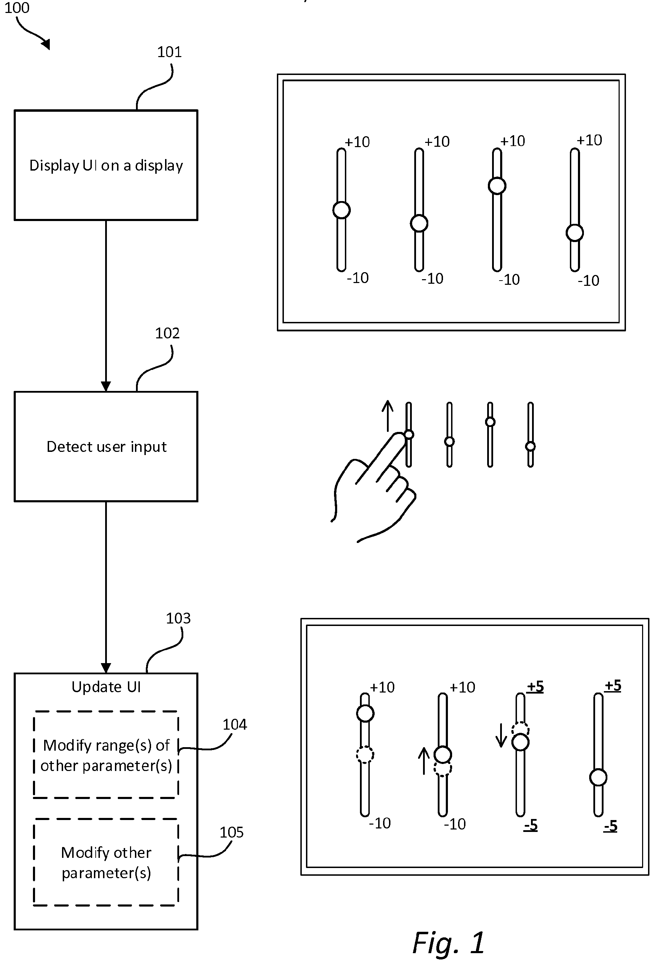

Fig. 1 shows a schematic flow chart representation of a method 100 for controlling an autonomous driving configuration or advanced driver assistance configuration comprising at least two user-adjustable parameters. For example, the method 100 can be used to control one or more (user-) adjustable parameters for an autonomous driving feature such as e.g. ego-vehicle speed, steering stiffness (comfortable or aggressive), lead car following distance, brake timing, and so forth. In other words, the flow chart illustrates a method 100 for controlling one or more Autonomous Drive (AD) features and/or one or more Advanced Driver-Assistance System (ADAS) features.

The method 100 comprises at an electronic device with a display (e.g. infotainment system in a centre console), displaying 101 a user interface (Ul). The user interface comprises a graphical representation of a current setting of the at least two adjustable parameters associated with the autonomous driving configuration or advanced driver assistance configuration. The graphical representation of the current setting of the at least two parameters may for example comprise a slider bar for each adjustable parameter as illustrated in Fig. 1. Each slider bar comprises a graphical element movable along the slider bar (e.g. a circle or a square). Even though four slider bars, representing four different parameters are illustrated, the skilled reader readily realizes that a different number of slider bars may be provided on the display. Naturally, the graphical representation of the current setting of two or more parameters may be in other forms such as virtual knobs, block charts, virtual gauges, or any other suitable visualization providing a good overview of the parameter settings.

Further, the method comprises (while displaying) detecting 102 via one or more input devices, a user input directed towards a first adjustable parameter of the at least two adjustable parameters. For example, the display may be in the form of a touch sensitive display, thus the step of detecting 102 a user input may comprise detecting a touch gesture on the touch sensitive display. More specifically, one can detect 102 a user touch directed towards the graphical element (the illustrated ball or circle) of the slider bar associated with the first adjustable parameter (as illustrated to the right of the box 102 in Fig. 1).

A touch sensitive display (may also be referred to as a touch screen) is to be understood as an input device by which a user can give input or control the information processing system through simple or multi-touch gestures. In other words, the input can be given by touching the screen or display with a special stylus or one or more fingers. Naturally, the (in-vehicle) electronic device may comprise alternative or additional input devices such as e.g. mechanical input mechanism (rotatable knobs, push buttons, wheels, levers, etc.). Accordingly, the step of detecting 102 the first user input may comprise detecting 102 a manipulation of a mechanical input mechanism (such as the rotation of a knob).

Further, the method 100 comprises updating 103 the graphical representation on the display based on the detected 102 input. More specifically, the graphical representation is updated by modifying or changing the current setting (or currently displayed setting) of the first parameter, and furthermore by modifying or changing one or more characteristics (or currently displayed characteristic) of a second adjustable parameter. In more detail, the modification 104, 105 of the second adjustable parameter occurs automatically as a user-modification to the first parameter is detected 102. Naturally, the update 103 may comprise modifying or changing 104, 105 one or more characteristics of further adjustable parameters (other than the first and second adjustable parameters).

In accordance with an exemplary embodiment, the modification of a characteristic of a second (or third, or fourth, etc.) adjustable parameter comprises modifying 104 at least one boundary value of the second adjustable parameter based on a first predefined function. In more detail, the first parameter comprises a brake timing (e.g. if an autonomous drive feature should brake late or early when heading into a curve). Here it is assumed that the detected 102 user input resulted in that the current setting of the brake timing was modified so that the vehicle brakes relatively late into a curve. Then, if the second parameter is considered an acceleration timing for exiting the curve, the available maximum range of the acceleration timing may be modified 104. More specifically, the lower values (allowing for an earlier or quicker acceleration out of the curve) may be rendered unavailable. Thus, the modified range of the second parameter (acceleration timing) may be set to be between five seconds and ten seconds instead of two seconds and ten seconds.

Another illustrative example is when the first parameter is brake timing (e.g. for when an obstacle is detected in the ego-vehicle path, or a lead vehicle is braking) and the second parameter is distance to lead vehicle. Similar to the above example, the allowable range for the distance to the lead vehicle is preferably modified based on the change in brake timing. More specifically, the possibility to keep a short distance to a lead vehicle can be limited if the user set the brake timing to a relatively "late" value. Accordingly, the first predefined function may be based on one or more security criteria, i.e. criteria specified in order to reduce the risk of collisions or road departures. Moreover, the first predefined function may be based on one or more comfort criteria, i.e. criteria specified in order to reduce strong accelerations, decelerations, jerk, etc. In respect to the latter, the comfort criteria may not allow reduced lead car distances at the same time as late braking due to the increased risk of unnecessarily hard braking during travel.

Additionally, or alternatively, the step of modifying at least one characteristic of the second adjustable parameter may comprise modifying 105 a current setting of the second adjustable parameter based on a second predefined function. This may either be if the set value of the second parameter "falls out of range" when the first parameter is modified, or that the vehicle control system "suggests" a new setting for the second parameter in order to maintain a comfort or safety level.

The modification of other the current setting of the other parameters and/or the ranges based on the modified setting of the first parameter is illustrated in the drawing to the right of box 103 in Fig. 1. Here, the first parameter is assumed to be a parameter represented by the leftmost slider bar in the box, and the dashed circles indicate "a previous setting" of the associated parameter. As illustrated, the current setting of the two middle slider bars (representing two parameters other than the first parameter) is modified 105, and the allowable ranges of the two right-most slider bars (representing two parameters other than the first parameter) is modified 104.

Furthermore, in accordance with another exemplary embodiment, the first parameter may be a key parameter, such as for example driver aggression. In contrast to other parameters, a key parameter can be associated with a driver profile configuration based on a predefined model. Thus, if it is detected 102, via one or more input devices, user input directed towards a key parameter out of the at least two adjustable parameters. The method comprises updating the graphical representation on the display by modifying the current setting of the key parameter, and modifying a current setting of at least one other parameter of the at least two parameters based on a predefined driver profile configuration.

In more detail, if we assume that the key parameter is driver aggression, then by modifying this parameter, at least one other parameter may be modified based on the predefined profile configuration. In more detail, if the detected user input indicates that the driver/user desires a more aggressive driving style, other parameters such as brake timing, distance to lead vehicle, curve exit acceleration, and so forth may be accordingly adjusted to represent the desired aggression level based on a predefined profile configuration. Moreover, by visually presenting all of the parameters and the associated values, the user is provided with an option to change one or more of the other parameters based on a personal preference. Thus, the method may further comprise saving a current configuration of the at least two adjustable parameters, and updating the predefined driver profile configuration based on the saved current configuration.

Executable instructions for performing these processes or functions are, optionally, included in a non-transitory computer-readable storage medium or other computer program product configured for execution by one or more processors.

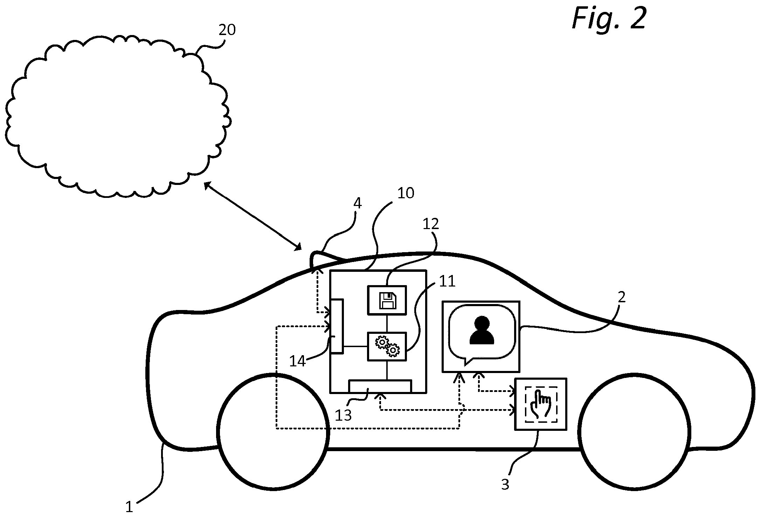

Fig. 2 is a schematic side view of a vehicle 1 comprising an electronic device having a display 2 for displaying a user interface, and an input device 3 connected to the display. The vehicle 1 further comprises a control device 10 connected to the display and to the input device(s) 3. The control device 10 may be a part of the electronic device having the display 2 and the input device 3, or a unit external to the electronic device. The various in-vehicle devices and systems are represented in a block diagram format in Fig. 2. The control device 10 is arranged for (directly/indirectly) controlling an autonomous driving configuration or advanced driver assistance configuration comprising at least two (user-) adjustable parameters. The control device 10 is connected to the display 2 and to the input device(s) 3. Furthermore, the control device 10 comprises one or more processors 11, a memory 12, a sensor interface 13 and a communication interface 14. The processor(s) 11 may also be referred to as a control circuit 11 or control circuitry 11.

The control circuit 11 is configured to execute instructions stored in the memory 12 to perform a method for controlling an autonomous driving configuration or advanced driver assistance configuration comprising at least two adjustable parameters according to any one of the embodiments disclosed herein. Stated differently, the memory 12 of the control device 10 can include one or more (non-transitory) computer-readable storage mediums, for storing computer-executable instructions, which, when executed by one or more computer processors 11, for example, can cause the computer processors 11 to perform the techniques described herein. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices.

In more detail, the control circuit 11 is configured to display on the display 2 a user interface (UI). The displayed user interface comprises a graphical representation of a current setting of the at least two adjustable parameters associated with the autonomous driving configuration or advanced driver assistance configuration. In other words, the graphical representation provides information to a user of the vehicle of the two or more parameters of one or more AD or ADAS features. In more detail, the graphical representation preferably provides information about a current setting and an applicable range for each parameter. For example, if an autonomous driving feature is selected, one of the parameters may be an ego-vehicle speed and the graphical representation may comprise a currently user-selected speed as well as a selectable range (e.g. 0 km/h - 120 km/h).

Thus, the at least two adjustable parameters comprise a brake timing and an acceleration timing or a distance to lead vehicle.

The control circuit 11 is further configured to, while displaying, detect via one or more input devices, a user input directed towards a first adjustable parameter of the two or more adjustable parameters. As previously described, the graphical representation of the current setting of the at least two parameters can comprises a slider bar for each adjustable parameter, each slider bar comprising a graphical element movable along the slider bar. Thus, the control circuit 11 can be configured to detect a user touch on the touch sensitive display directed towards the graphical element of the slider bar associated with the first adjustable driving feature of the at least two adjustable advanced driver assistance features.

Alternatively, or additionally, the electronic device may comprise a mechanical input mechanism, and the control circuit 10 can accordingly be configured to detect the first user input by detecting a first manipulation of the mechanical input mechanism. The mechanical input mechanism may for example be a push button and/or a rotatable knob, wherefore the control circuit 10 can be configured to detect a push action on the push button and/or a rotation of the rotatable knob.

Further, the control circuit 11 is configured to update the graphical representation that is displayed on the display 2 based on the detected user input (i.e. based on the signal obtained from the user input device 3). In more detail, the control circuit 11 is configured to modify the current setting of the first parameter and to modify at least one characteristic of a second adjustable parameter of the at least two adjustable parameters based on the detected user input. Concurrently as the control circuit 11 modifies any actual operational settings and/or characteristics of two or more adjustable parameters the modification or change is also reflected in the updated graphical representation on the display 2.

Further, the vehicle 1 may be connected to external network(s) 20 via for instance a wireless link (e.g. for retrieving map data, software updates, etc.). The same or some other wireless link may be used to communicate with other vehicles 2 in the vicinity of the vehicle or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

The present invention has been presented above with reference to specific embodiments. However, other embodiments than the above described are possible and within the scope of the invention as defined by the claims. Different method steps than those described above, performing the method by hardware or software, may be provided within the scope of the invention as defined by the claims. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

The processor(s) 11 (associated with the control device 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be appreciated that the sensor interface 14 may also provide the possibility to acquire sensor data directly or via dedicated sensor control circuitry in the vehicle. The communication/antenna interface 13 may further provide the possibility to send output to a remote location (e.g. remote operator or control centre) by means of the antenna 4. Moreover, some sensors in the vehicle may communicate with the control device 10 using a local network setup, such as CAN bus, I2C, Ethernet, optical fibres, and so on. The communication interface 13 may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

Accordingly, it should be understood that parts of the described solution may be implemented either in the vehicle, in a system located external the vehicle, or in a combination of internal and external the vehicle; for instance in a server in communication with the vehicle, a so called cloud solution. For instance, sensor data may be sent to an external system and that system performs the steps to compare the sensor data (movement of the other vehicle) with the predefined behaviour model. The different features and steps of the embodiments may be combined in other combinations than those described.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. As already exemplified, the modification of the first parameter and the characteristic(s) of a second parameter may occur simultaneously. Such variation will depend on the software and hardware systems chosen and on designer choice. All such variations are within the scope of the invention as defined by the claims.

Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A method (100) for controlling an autonomous driving configuration or an advanced driver-assistance system configuration comprising at least two adjustable parameters, the method comprising:
at an electronic device with a display:
displaying (101) on the display a user interface comprising:
a graphical representation of a current setting of the at least two adjustable parameters associated with the autonomous driving configuration or advanced driver-assistance configuration;
detecting (102) via one or more input devices, a user input directed towards a first adjustable parameter of the at least two adjustable parameters;
updating (103) the graphical representation on the display based on the detected user input by:
modifying the current setting of the first adjustable parameter of the at least two adjustable parameters and modifying at least one characteristic of a second adjustable parameter of the at least two adjustable parameters based on the detected user input, wherein the first adjustable parameter comprises brake timing and wherein the second adjustable parameter comprises acceleration timing or distance to lead vehicle.

2. The method according to claim 1, wherein the graphical representation of the current setting of the at least two parameters comprises a slider bar for each adjustable parameter, each slider bar comprising a graphical element movable along the slider bar.

3. The method according to claim 2, wherein the display is a touch sensitive display, and wherein the step of detecting (102) a user input comprises detecting a user touch on the touch sensitive display directed towards the graphical element of the slider bar associated with the first adjustable parameter of the at least two adjustable parameters.

4. The method according to any one of the preceding claims, wherein the electronic device further comprises a mechanical input mechanism, and wherein the step of detecting (102) the first user input comprises detecting a first manipulation of the mechanical input mechanism.

5. The method according to any one of the preceding claims, wherein modifying at least one characteristic of the second adjustable parameter comprises modifying (104) at least one boundary value of the second adjustable parameter based on a first predefined function.

6. The method according to any one of the preceding claims, wherein modifying at least one characteristic of the second adjustable parameter comprises modifying (105) a current setting of the second adjustable parameter based on a second predefined function.

7. A computer-readable storage medium storing one or more programs configured to be executed by one or more processors of a control device connected to a display and to an input device, the one or more programs comprising instructions for performing the method according to any one of the preceding claims.

8. A control device (10) for controlling an autonomous driving configuration or an advanced driver-assistance system configuration comprising at least two adjustable parameters, the control device comprising a control circuit (11) connectable to a display (2) and one or more input devices (3), the control circuit being configured to:
display on the display (2) a user interface comprising:
a graphical representation of a current setting of the at least two adjustable parameters associated with the autonomous driving configuration or advanced driver-assistance configuration;
detect via the one or more input devices (3), a user input directed towards a first adjustable parameter of the at least two adjustable parameters;
update the graphical representation on the display based on the detected user input by:
modifying the current setting of the first adjustable parameter of the at least two adjustable parameters and modifying at least one characteristic of a second adjustable parameter of the at least two adjustable parameters based on the detected user input wherein the first adjustable parameter comprises brake timing and wherein the second adjustable parameter comprises acceleration timing or distance to a lead vehicle.

9. The control device (10) according to claim 8, wherein the graphical representation of the current setting of the at least two parameters comprises a slider bar for each adjustable parameter, each slider bar comprising a graphical element movable along the slider bar.

10. The control device (10) according to claim 9, wherein the display is a touch sensitive display, and wherein the control circuit (11) is configured to detect a user input directed towards a first adjustable parameter by detecting a user touch on the touch sensitive display directed towards the graphical element of the slider bar associated with the first adjustable driving feature of the at least two adjustable driving assistance features.

11. The control device (10) according to any one of claims 8 - 10, wherein the one or more input devices (3) comprises a mechanical input mechanism, and wherein the control circuit (11) is configured to detect the first user input by detecting a first manipulation of the mechanical input mechanism.

12. The control device (10) according to any one of claims 8 - 11, wherein modifying at least one characteristic of the second adjustable parameter comprises modifying at least one boundary value of the second adjustable parameter based on a first predefined function.

13. The control device (10) according to any one of claims 8 - 12, wherein modifying at least one characteristic of the second adjustable parameter comprises modifying a current setting of the second adjustable parameter based on a second predefined function.

14. A vehicle (1) comprising:
an electronic device comprising a display (2) and at least one input device (3); and
a control device (10) according to any one of claims 8 - 13.

## Patentansprüche

1. Verfahren (100) zum Steuern einer autonomen Fahrkonfiguration oder einer Fahrerassistenzkonfiguration, die mindestens zwei einstellbare Parameter umfasst, wobei das Verfahren Folgendes umfasst:
an einer elektronischen Vorrichtung mit einer Anzeige:
Anzeigen (101), auf der Anzeige, einer Benutzeroberfläche, die Folgendes umfasst:
eine grafische Darstellung einer aktuellen Einstellung der mindestens zwei einstellbaren Parameter, die der autonomen Fahrkonfiguration oder Fahrerassistenzkonfiguration zugeordnet sind;
Erfassen (102), über eine oder mehrere Eingabevorrichtungen, einer Benutzereingabe, die auf einen ersten einstellbaren Parameter der mindestens zwei einstellbaren Parameter gerichtet ist;
Aktualisieren (103) der grafischen Darstellung auf der Anzeige basierend auf der erfassten Benutzereingabe durch:
Ändern der aktuellen Einstellung des ersten einstellbaren Parameters der mindestens zwei einstellbaren Parameter und Ändern mindestens einer Eigenschaft eines zweiten einstellbaren Parameters der mindestens zwei einstellbaren Parameter basierend auf der erfassten Benutzereingabe, wobei der erste einstellbare Parameter Bremszeit umfasst und wobei der zweite einstellbare Parameter Beschleunigungszeit oder Abstand zu einem vorausfahrenden Fahrzeug umfasst.

2. Verfahren nach Anspruch 1, wobei die grafische Darstellung der aktuellen Einstellung der mindestens zwei Parameter einen Schieberegler für jeden einstellbaren Parameter umfasst, wobei jeder Schieberegler ein entlang des Schiebereglers bewegbares grafisches Element umfasst.

3. Verfahren nach Anspruch 2, wobei es sich bei der Anzeige um eine berührungsempfindliche Anzeige handelt und wobei der Schritt des Erfassens (102) einer Benutzereingabe Erfassen einer Benutzerberührung auf der berührungsempfindlichen Anzeige, die auf das grafische Element des Schiebereglers gerichtet ist, der dem ersten einstellbaren Parameter der mindestens zwei einstellbaren Parameter zugeordnet ist, umfasst.

4. Verfahren nach einem der vorhergehenden Ansprüche, wobei die elektronische Vorrichtung ferner einen mechanischen Eingabemechanismus umfasst und wobei der Schritt des Erfassens (102) der ersten Benutzereingabe Erfassen einer ersten Änderung des mechanischen Eingabemechanismus umfasst.

5. Verfahren nach einem der vorhergehenden Ansprüche, wobei das Ändern mindestens einer Eigenschaft des zweiten einstellbaren Parameters Ändern (104) mindestens eines Grenzwertes des zweiten einstellbaren Parameters basierend auf einer ersten vordefinierten Funktion umfasst.

6. Verfahren nach einem der vorhergehenden Ansprüche, wobei das Ändern mindestens einer Eigenschaft des zweiten einstellbaren Parameters Ändern (105) einer aktuellen Einstellung des zweiten einstellbaren Parameters basierend auf einer zweiten vordefinierten Funktion umfasst.

7. Computerlesbares Speichermedium, das ein oder mehrere Programme speichert, die dazu konfiguriert sind, durch einen oder mehrere Prozessoren einer Steuervorrichtung, die mit einer Anzeige und einer Eingabevorrichtung verbunden ist, ausgeführt zu werden, wobei das eine oder die mehreren Programme Anweisungen zum Durchführen des Verfahrens nach einem der vorhergehenden Ansprüche umfasst.

8. Steuervorrichtung (10) zum Steuern einer autonomen Fahrkonfiguration oder einer Fahrerassistenzkonfiguration, die mindestens zwei einstellbare Parameter umfasst, wobei die Steuervorrichtung eine Steuerschaltung (11), die mit einer Anzeige (2) und einer oder mehreren Eingabevorrichtungen (3) verbindbar ist, umfasst, wobei die Steuerschaltung zu Folgendem konfiguriert ist:
Anzeigen, auf der Anzeige (2), einer Benutzeroberfläche, die Folgendes umfasst:
eine grafische Darstellung einer aktuellen Einstellung der mindestens zwei einstellbaren Parameter, die der autonomen Fahrkonfiguration oder der Fahrerassistenzkonfiguration zugeordnet sind;
Erfassen, über die eine oder die mehreren Eingabevorrichtungen (3), einer Benutzereingabe, die auf einen ersten einstellbaren Parameter der mindestens zwei einstellbaren Parameter gerichtet ist;
Aktualisieren der grafischen Darstellung auf der Anzeige basierend auf der erfassten Benutzereingabe durch:
Ändern der aktuellen Einstellung des ersten einstellbaren Parameters der mindestens zwei einstellbaren Parameter und Ändern mindestens einer Eigenschaft eines zweiten einstellbaren Parameters der mindestens zwei einstellbaren Parameter basierend auf der erfassten Benutzereingabe, wobei der erste einstellbare Parameter Bremszeit umfasst und wobei der zweite einstellbare Parameter Beschleunigungszeit oder Abstand zu einem vorausfahrenden Fahrzeug umfasst.

9. Steuervorrichtung (10) nach Anspruch 8, wobei die grafische Darstellung der aktuellen Einstellung der mindestens zwei Parameter einen Schieberegler für jeden einstellbaren Parameter umfasst, wobei jeder Schieberegler ein entlang des Schiebereglers bewegbares grafisches Element umfasst.

10. Steuervorrichtung (10) nach Anspruch 9, wobei es sich bei der Anzeige um eine berührungsempfindliche Anzeige handelt und wobei die Steuerschaltung (11) dazu konfiguriert ist, eine auf einen ersten einstellbaren Parameter gerichtete Benutzereingabe durch Erfassen einer Benutzerberührung auf der berührungsempfindlichen Anzeige, die auf das grafische Element des Schiebereglers gerichtet ist, der dem ersten einstellbaren Fahrmerkmal der mindestens zwei einstellbaren Fahrassistenzmerkmale zugeordnet ist, zu erfassen.

11. Steuervorrichtung (10) nach einem der Ansprüche 8-10, wobei die eine oder die mehreren Eingabevorrichtungen (3) einen mechanischen Eingabemechanismus umfasst und wobei die Steuerschaltung (11) dazu konfiguriert ist, die erste Benutzereingabe durch Erfassen einer ersten Änderung des mechanischen Eingabemechanismus zu erfassen.

12. Steuervorrichtung (10) nach einem der Ansprüche 8-11, wobei das Ändern mindestens einer Eigenschaft des zweiten einstellbaren Parameters Ändern mindestens eines Grenzwertes des zweiten einstellbaren Parameters basierend auf einer ersten vordefinierten Funktion umfasst.

13. Steuervorrichtung (10) nach einem der Ansprüche 8-12, wobei das Ändern mindestens einer Eigenschaft des zweiten einstellbaren Parameters Ändern einer aktuellen Einstellung des zweiten einstellbaren Parameters basierend auf einer zweiten vordefinierten Funktion umfasst.

14. Fahrzeug (1), umfassend:
eine elektronische Vorrichtung, die eine Anzeige (2) und mindestens eine Eingabevorrichtung (3) umfasst; und
eine Steuervorrichtung (10) nach einem der Ansprüche 8-13.

## Revendications

1. Procédé (100) de commande d'une configuration de conduite autonome ou d'une configuration avancée de système d'assistance à la conduite comprenant au moins deux paramètres réglables, le procédé comprenant :
sur un appareil électronique doté d'un écran :
l'affichage (101) sur l'écran d'une interface utilisateur comprenant :
une représentation graphique d'un réglage actuel des au moins deux paramètres réglables associés à la configuration de conduite autonome ou à la configuration avancée d'assistance à la conduite ;
la détection (102) via un ou plusieurs dispositifs d'entrée, d'une entrée utilisateur dirigée vers un premier paramètre réglable des au moins deux paramètres réglables ;
la mise à jour (103) de la représentation graphique sur l'écran sur la base de l'entrée utilisateur détectée en :
modifiant le réglage actuel du premier paramètre réglable des au moins deux paramètres réglables et en modifiant au moins une caractéristique d'un second paramètre réglable des au moins deux paramètres réglables sur la base de l'entrée utilisateur détectée, le premier paramètre réglable comprenant le temps de freinage et le second paramètre réglable comprenant le temps d'accélération ou la distance jusqu'au véhicule de tête.

2. Procédé selon la revendication 1, dans lequel la représentation graphique du réglage actuel des au moins deux paramètres comprend une barre coulissante pour chaque paramètre réglable, chaque barre coulissante comprenant un élément graphique mobile le long de la barre coulissante.

3. Procédé selon la revendication 2, dans lequel l'écran est un écran tactile, et dans lequel l'étape de détection (102) d'une entrée utilisateur comprend la détection d'un contact utilisateur sur l'écran tactile dirigé vers l'élément graphique de la barre coulissante associée au premier paramètre réglable des au moins deux paramètres réglables.

4. Procédé selon l'une quelconque des revendications précédentes, dans lequel le dispositif électronique comprend en outre un mécanisme d'entrée mécanique, et dans lequel l'étape de détection (102) de la première entrée utilisateur comprend la détection d'une première manipulation du mécanisme d'entrée mécanique.

5. Procédé selon l'une quelconque des revendications précédentes, dans lequel la modification d'au moins une caractéristique du second paramètre réglable comprend la modification (104) d'au moins une valeur limite du second paramètre réglable sur la base d'une première fonction prédéfinie.

6. Procédé selon l'une quelconque des revendications précédentes, dans lequel la modification d'au moins une caractéristique du second paramètre réglable comprend la modification (105) d'un réglage actuel du second paramètre réglable sur la base d'une seconde fonction prédéfinie.

7. Support de stockage lisible par ordinateur stockant un ou plusieurs programmes configurés pour être exécutés par un ou plusieurs processeurs d'un dispositif de commande connectés à un écran et à un dispositif d'entrée, le ou les programmes comprenant des instructions pour exécuter le procédé selon l'une quelconque des revendications précédentes.

8. Dispositif de commande (10) pour commander une configuration de conduite autonome ou une configuration avancée de système d'assistance à la conduite comprenant au moins deux paramètres réglables, le dispositif de commande comprenant un circuit de commande (11) pouvant être connecté à un écran (2) et un ou plusieurs dispositifs d'entrée (3), le circuit de commande étant configuré pour :
afficher sur l'écran (2) une interface utilisateur comprenant :
une représentation graphique d'un réglage actuel des au moins deux paramètres réglables associés à la configuration de conduite autonome ou à la configuration avancée d'assistance à la conduite ;
détecter via le ou les dispositifs d'entrée (3), une entrée utilisateur dirigée vers un premier paramètre réglable parmi les au moins deux paramètres réglables ;
mettre à jour la représentation graphique sur l'écran en fonction de l'entrée utilisateur détectée en :
modifiant le réglage actuel du premier paramètre réglable des au moins deux paramètres réglables et en modifiant au moins une caractéristique d'un second paramètre réglable des au moins deux paramètres réglables sur la base de l'entrée utilisateur détectée, le premier paramètre réglable comprenant le temps de freinage et le second paramètre réglable comprenant le temps d'accélération ou la distance jusqu'à un véhicule de tête.

9. Dispositif de commande (10) selon la revendication 8, dans lequel la représentation graphique du réglage actuel des au moins deux paramètres comprend une barre coulissante pour chaque paramètre réglable, chaque barre coulissante comprenant un élément graphique mobile le long de la barre coulissante.

10. Dispositif de commande (10) selon la revendication 9, dans lequel l'écran est un écran tactile, et dans lequel le circuit de commande (11) est configuré pour détecter une entrée utilisateur dirigée vers un premier paramètre réglable en détectant un contact de l'utilisateur sur l'écran tactile dirigé vers l'élément graphique de la barre coulissante associée à la première fonction de conduite réglable des au moins deux fonctions d'assistance à la conduite réglables.

11. Dispositif de commande (10) selon l'une quelconque des revendications 8 à 10, dans lequel le ou les dispositifs d'entrée (3) comprennent un mécanisme d'entrée mécanique, et dans lequel le circuit de commande (11) est configuré pour détecter la première entrée utilisateur en détectant une première manipulation du mécanisme d'entrée mécanique.

12. Dispositif de commande (10) selon l'une quelconque des revendications 8 à 11, dans lequel la modification d'au moins une caractéristique du second paramètre réglable comprend la modification d'au moins une valeur limite du second paramètre réglable sur la base d'une première fonction prédéfinie.

13. Dispositif de commande (10) selon l'une quelconque des revendications 8 à 12, dans lequel la modification d'au moins une caractéristique du second paramètre réglable comprend la modification d'un réglage actuel du second paramètre réglable sur la base d'une seconde fonction prédéfinie.

14. Véhicule (1) comprenant :
un dispositif électronique comprenant un écran (2) et au moins un dispositif d'entrée (3) ; et
un dispositif de commande (10) selon l'une quelconque des revendications 8 à 13.
